Europäisches Patentamt

European Patent Office

Office européen des brevets

(11) Publication number: **0 193 263**
**B1**

## EUROPEAN PATENT SPECIFICATION

(45) Date of publication of patent specification: **30.08.89**

(51) Int. Cl.⁴: **C 08 F 10/02, C 08 F 2/42**

(21) Application number: **86300342.2**

(22) Date of filing: **20.01.86**

(54) Reduction of isomerization in solution process for polymerization of alpha-olefins.

(30) Priority: **28.01.85 GB 8502067**

(43) Date of publication of application:
**03.09.86 Bulletin 86/36**

(45) Publication of the grant of the patent:
**30.08.89 Bulletin 89/35**

(84) Designated Contracting States:
**AT BE DE FR GB IT NL SE**

(56) References cited:
**EP-A-0 062 127**
**EP-A-0 067 645**
**DE-A-3 305 782**

(73) Proprietor: **DU PONT CANADA INC.**
**Box 2200 Streetsville Postal Station**
**Mississauga Ontario L5M 2H3 (CA)**

(72) Inventor: **Zboril, Vaclav George**
**613 Pimlico Place**
**Kingston Ontario K7M 5T7 (CA)**
Inventor: **Zelonka, Ronald Andrew**
**12 Old Oak Road**
**Kingston Ontario K7M 7K3 (CA)**

(74) Representative: **Ellis, John Clifford Holgate et al**
**MEWBURN ELLIS & CO. 2/3 Cursitor Street**
**London EC4A 1BQ (GB)**

Courier Press, Leamington Spa, England.

## Description

The present invention relates to a process for the polymerization of alpha-olefins and especially to a reduction of isomerization in a solution process for the polymerization of ethylene and higher alpha-olefins. In particular the present invention relates to such reduction of isomerization in a process in which a deactivated catalyst is not separated from the polymer.

Polymers of ethylene, for example, homopolymers of ethylene and copolymers of ethylene and higher alpha-olefins, are used in large volumes for a wide variety of end uses, for example, in the form of film, fibres, moulded and thermoformed articles, pipe, coatings and the like.

Processes for the preparation of, in particular, copolymers of ethylene and higher alpha-olefins are known. Such processes include processes in which the monomers are polymerized in the presence of a coordination cataylst, for example, a cataylst comprising a compound of a transition metal belonging to Groups IVB—VIB of the Periodic Table and an organometallic compound of a metal belonging to Groups I—IIIA of the Periodic Table.

A particularly preferred process for the polymerization of alpha-olefins in the high temperature or "solution" polymerization process, an example of which is described in Canadian Patent 660 869 of A. W. Anderson, E. L. Fallwell and J. M. Bruce, which issued 1963 April 9. In a solution process the process parameters are selected in such a way that both the monomer and polymer are soluble in the reaction medium. Under such conditions accurate control over the degree of polymerization, and hence the molecular weight of the polymer obtained, may be achieved, for example, by control of the reaction temperature. Solution processes are also disclosed in Canadian Patents 1 171 065 of V. G. Zboril, M. A. Hamilton and R. W. Rees and 1 171 066 of V. G. Zboril and M. A. Hamilton, both issued 1984 July 17, and Canadian Patent No. 1 220 189 of M. A. Hamilton, D. A. Harbourne, C. G. Russell, V. G. Zboril and R. Mulhaupt, issued 1987 April 07.

The polymerization reaction in a solution polymerization process is normally terminated by addition of a so-called "deactivator". A wide variety of compounds are capable of deactivating the coordination catalyst, especially at the high temperatures used in a solution polymerization process. However, a deactivator must meet other, more stringent, criteria in order to be acceptable for use in a commercial process. For instance, if a so-called catalyst removal process is used, both the deactivated catalyst residues and the deactivator must be capable of being removed from the reaction mixture in such a removal process. If the deactivated catalyst remains in the polymer, the deactivator and deactivated catalyst residues must not cause problems in the separation of polymer from solvent and unreacted monomers, in the processing of the polymer obtained and in the resultant fabricated articles. In any event, the polymer must have commercially-acceptable colour, odour and toxicity properties. It is particularly difficult to assess the possible effects of a potential deactivator at the high temperatures of a solution process, especially with regard to isomerization of comonomers, degradation of the deactivator, generation of coloured species, reaction with antioxidants and other stabilizers and the like. Moreover, the behavior of the deactivator may be quite sensitive to changes in the operation of a solution process.

Deactivators for solution polymerization processes are known, for example, a fatty acid or an alcohol. The fatty acid is admixed with hydrocarbon solvent, normally the solvent of the polymerization process, and fed into the polymerization mixture, usually shortly after that mixture passes from the reactor. The polymerization mixture that has been treated with deactivator contains catalyst residues which may be removed by contacting the mixture with an adsorbent, for example, alumina. Such a deactivation and catalyst removal process is described in Canadian Patent 732 279 of B. B. Baker, K. M. Brauner and A. N. Oemler, which issued 1966 April 12. The deactivation of coordination catalysts in a polymer slurry using anhydrous carbon dioxide is disclosed in U. S. Patent 4 211 863 of M. P. McDaniel, J. D. Hottovy and M. B. Welch, which issued 1980 July 08. The use of carbon dioxide or carbon monoxide in the deactivation of coordination catalysts is disclosed in Japanese Patent Application 56/074 109 of Mitsubishi Petrochemical, published 1981 June 19.

Coordination catalysts containing vanadium may conveniently be deactivated by contacting the polymerization mixture with a solution of a salt of an alkaline earth metal or zinc and an aliphatic monocarboxylic acid dissolved in the hydrocarbon solvent used in the polymerization process. Such deactivation of coordination catalysts containing vanadium tends to result in polymer of improved colour, as is disclosed in EP—A—0062127 Titanium-based coordination catalysts used in a solution polymerization process may be deactivated to give polymer of improved colour by sequentially contacting the polymerization mixture with a minor amount of water and then with a solution of a salt of an alkaline earth metal or zinc and an aliphatic monocarboxylic acid dissolved in a hydrocarbon solvent, preferably the solvent used in polymerization process, as is disclosed in EP—A—0067645.

The two European patent applications discussed in the preceding paragraph relate to deactivation of catalysts in solution polymerization processes. Different considerations apply where other polymerization methods are used. Thus DE—A—3 305 782, which is concerned with high pressure polymerization and copolymerization of ethylene without the use of a hydrocarbon solvent, seeks to avoid the use of salt solutions, because the hydrocarbon solvent used for dissolving the salt gives rise to technical difficulties in that polymerization method. Instead of a salt solution, therefore, DE—A—3 305 782 suggests the use of an activator in the form of a gas, mentioning for this purpose gases chosen from oxygen, water, ethyl,

EP 0 193 263 B1

alcohols, carboxylic acids, esters, aldehydes, ketones, carbon monoxide, carbon dioxide, ammonia, amines, nitrogen monoxide, hydrogen sulphide, sulphides and sulphoxides. Carbon dioxide is preferred.

The present invention is concerned with solution polymerization, and there is therefore no objection to the use of a solution of salt or an alkaline earth metal or zinc and aliphatic monocarboxylic acid dissolved in hydrocarbon solvent. The inventors have however found that the level of isomerization of alpha-olefins having at least four carbon atoms that may occur on sequential deactivation or a coordination catalyst using water and a salt of an alkaline earth metal or zinc and an aliphatic monocarboxylic acid may be reduced by contacting the coordination catalyst with a minor amount of carbon dioxide, carbon monoxide, or dimethyl carbonate, instead of water, prior to contacting the catalyst with the above salt. Polymer of acceptable colour is obtainable, regardless of whether or not the monomers can undergo isomerization.

Accordingly the present invention provides a solution polymerization process for the preparation of high molecular weight polymers of alpha-olefins selected from the group consisting of homopolymers of ethylene and copolymers of ethylene and $C_4$—$C_{12}$ higher alpha-olefins, said process comprising feeding monomer selected from the group consisting of ethylene and mixtures of ethylene and at least one $C_4$—$C_{12}$ higher alpha-olefin, a coordination catalyst and inert hydrocarbon solvent to a reactor, said catalyst being a titanium-based and/or vanadium-based coordination catalyst, polymerizing said monomer at a temperature of up to 320°C and a pressure of less than 25 MPa, deactivating the catalyst in the solution so obtained by sequentially admixing therewith a minor amount of a deactivating agent followed by a solution of a salt of an alkaline earth metal or zinc and aliphatic monocarboxylic acid dissolved in hydrocarbon solvent, said deactivating agent being selected from the group consisting of carbon dioxide, carbon monoxide, and dimethyl carbonate, and mixtures thereof, separating the hydrocarbon solvent and other volatile matter from the resultant solution and recovering a composition comprising said high molecular weight polymer, the amount of the deactivating agent being not more than 2.5 moles of the deactivating agent per mole of halogen plus alkyl radicals in the coordination catalyst.

In a preferred embodiment of the process of the present invention, the deactivating agent is carbon dioxide.

In another embodiment of the process of the present invention, the carboxylic acid is $C_8$—$C_{10}$ carboxylic acid and the alkaline earth metal is calcium.

In a further embodiment the coordination catalyst is a titanium-based coordination catalyst.

The present invention is directed to a solution polymerization process for the preparation of high molecular weight polymers of alpha-olefins. In particular the polymers of alpha-olefins are homopolymers of ethylene or copolymers of ethylene and higher alpha-olefins, especially such higher alpha-olefins having 4 to 12 carbon atoms, i.e. $C_4$—$C_{12}$ alpha-olefins, including bicyclic alpha-olefins, examples of which are butene-1, hexene-1, octene-1 and bicyclo-(2,2,1)-2-heptene. In addition cyclic endomethylenic dienes may be fed to the process with the ethylene or mixtures of ethylene and $C_4$—$C_{12}$ alpha-olefin, as is described in Canadian Patent 980 498 of C. T. Elston, which issued 1975 December 23.

In a solution polymerization process of the present invention monomer, a coordination catalyst and inert hydrocarbon solvent are fed to a reactor. Coordination catalysts for solution polymerization processes are known, for example those described in the aforementioned Canadian Patents 660 869, 1 171 065 and 1 171 066, in Canadian Patent 1 119 154 of A. N. Mollison and V. G. Zboril, which issued 1982 March 02 and in the aforementioned Canadian Patent No 1 220 189. Such coordination catalysts may be titanium-based and/or vanadium based catalysts, especially titanium-based or titanium/vanadium-based catalysts in which 20—100% of the transition metal is titanium. The monomer is ethylene or a mixture of ethylene and one or more of the higher alpha-olefins.

Solution polymerization processes may be operated at temperatures of up to 320°C and especially in the range 105—310°C, the lower temperature being above the lowest solubilization temperature of the polymer, as will be understood by those skilled in the art of solution polymerization processes. The pressures used in the process of the present invention are those known for solution polymerization processes viz. less than 25 MPa and especially in the range of about 4—25 MPa. The pressure and temperature are controlled so that both the unreacted monomers and the polymers formed remain in solution.

The hydrocarbon solvent used in the polymerization process is a hydrocarbon solvent that is inert with respect to the coordination catalyst. Such solvents are known and include hexane, heptane, octane, cyclohexane, methylcyclohexane and hydrogenated naphtha. The solvent used in the polymerization process is preferably also used in the preparation of the coordination catalyst. The hydrocarbon solvent is the major component of the polymerization mixture fed to the reactor, usually comprising at least 60% by weight of the reaction mixture. In the process the monomer is dissolved in the solvent.

The mixture that exits from the polymerization reactor comprises polymer, unreacted monomers, coordination catalyst some of which remains in an active state, and hydrocarbon solvent. A deactivator is added to the mixture to terminate the polymerization process. In the process of the present invention the deactivator is added in two steps.

In the first step, a minor amount of deactivating agent is added to the polymerization mixture. The deactivating agent is selected from the group consisting of carbon dioxide, carbon monoxide and dimethyl carbonate and mixtures thereof.

The amount of the said deactivating agent added is not more than 2.5 moles of deactivating agent per

3

mole of halogen plus alkyl radicals in the coordination catalyst. Preferably 0.25—1.5 moles are added per mole of halogen plus alkyl radicals in the catalyst.

In the second step the deactivator is a solution of a non-stoichiometric salt of an alkaline earth metal or zinc and aliphatic monocarboxylic acid dissolved in hydrocarbon solvent, especially a salt having excess acid to facilitate solubility. In particular the hydrocarbon solvent used for the deactivator is the same as the solvent used in the polymerization process. If a different solvent is used, it must be compatible with the solvent used in the polymerization process, not cause precipitation of any component of the polymerization mixture and not cause adverse effects on the solvent recovery system associated with the polymerization process.

The salt of the second deactivator solution must be dissolved in the solvent in order to obtain intimate contact between the deactivator and the product of reaction of catalyst with the first deactivator, and to obtain uniform dispersion of the deactivator and catalyst residues i.e. the form of the catalyst after deactivation, throughout the polymer, thereby facilitating the production of polymer of uniform properties.

In the salt of the deactivator solution, the metal is an alkaline earth metal or zinc, especially magnesium or calcium. The remainder of the salt is derived from at least one aliphatic carboxylic acid, especially such an acid having 6 to 20 carbon atoms. In a preferred embodiment the acid has 8 to 12 carbon atoms. The acid is preferably a branched chain aliphatic acid although straight chain aliphatic acids and cycloaliphatic acids may be used. Moreover the acids may be saturated or unsaturated acids. However, the acid must be such that the salt thereof that is used in the process of the present invention is soluble in the hydrocarbon solvent used therein. In preferred embodiments the salt is calcium 2-ethyl hexanoate, calcium naphthenate, calcium iso-stearate or the like.

In the process of the present invention the deactivated polymerization mixture is fed to a separator, which may be a multistage separator, to separate unreacted monomer, hydrocarbon solvent and any other volatile matter from the polymer. In contrast to the usual practice in a solution process, no steps are taken to remove catalyst residues and/or deactivator from the polymer using adsorbents or other techniques. After separation from solvent and unreacted monomer, the polymer may be extruded into water and cut into pellets or other suitable comminuted shapes.

The recovered polymer may then be treated with saturated steam, optionally admixed with air, at atmospheric pressure to, for example, reduce the amount of volatile materials and improve polymer colour. The treatment may be carried out for about 1 to 16 hours, following which the polymer may be dried and cooled with a stream of air for 1 to 4 hours. Pigments, antioxidants and other additives may be added to the polymer either before or after the polymer is initially formed into pellets or other comminuted shapes.

The antioxidant incorporated into polymer obtained from the process of the present invention may, in embodiments, be a single antioxidant e.g. a hindered phenolic antioxidant, or a mixture of antioxidants e.g. a hindered phenolic antioxidant combined with a secondary antioxidant e.g. a phosphite. Both types of antioxidant are known in the art. For example, the ratio of phenolic antioxidant to secondary antioxidant may be in the range 0.25:1 to 1:1 with the total amount of antioxidant being in the range of 400 to 2000 ppm.

The use of the defined deactivating agents, as part of the deactivator system of the present invention, is important not only with respect of the amount of isomerization of the comonomer but also with respect to the colour of the polymer subsequently obtained and with respect to impurities that might be introduced into the polymerization process. The by-products formed when the defined deactivating agents are used as deactivator tend to be of low volatility whereas the by-products formed when organic deactivators are used tend to be aldehydes, ketones, organic acids and the like. Such organic compounds may be difficult to remove in the solvent recycle process associated with the polymerization process. The use of controlled amounts of the deactivating agents, as part of the deactivator system, can result in an improved solution polymerization process.

The polymers produced by the process of the present invention are capable of being fabricated into a wide variety of articles, as is known for homopolymers of ethylene and copolymers of ethylene and higher alpha-olefins.

Unless otherwise noted, in the examples hereinafter the following procedures were used:

The reactor was a 95 ml (depth = 15.1 mm, diameter = 88.9 mm) pressure vessel fitted with a six-bladed agitator having a diameter of 66.7 mm, a heating jacket, pressure and temperature controllers, three feed lines and an outlet line. The feed lines were located adjacent to the tips of the agitator blades while the outlet line was adjacent to the centre of the agitator. The catalyst precursors and other ingredients were prepared as solutions in cyclohexane which had been purified by being passed through a silica gel bed, stripped with nitrogen and passed through another silica gel bed followed by beds of 4A molecular sieve and of alumina. The monomer(s) was metered directly into the reactor. The rates of feed of the first and second components of the catalyst were adjusted to produce the desired conditions in the reactor.

Two types of experiments were performed:

- (a) Measurement of Isomerization

Unless stated to the contrary, an ethylene concentration of about 5% by weight and a butene-1 concentration of about 3% by weight were used in experiments to measure the amount of isomerization.

4

The effluent from the polymerization reactor was passed through carbon steel tubing of 4.57 mm ID that was heated to 320°C. The hold-up time of the effluent in this tubing was about one minute. The effluent was then fed into a stainless steel tubular reactor of 10.6 mm ID which was maintained at 320°C. The first deactivator was injected concentrically into the middle of the effluent stream at the inlet to the tubular reactor. The second deactivator, a 4.2 mmole solution of calcium 2-ethyl hexanoate, was injected into the effluent stream at the exit to the tubular reactor; the amount of second deactivator was about 0.17 moles of calcium for each mole of chlorine plus alkyl radicals in the catalyst.

The solvent and monomers were flashed off from the treated effluent thus obtained and analyzed for butene-1, cis-butene-2 and trans-butene-2 using gas chromatography. The amount of isomerization was calculated using the formula:

$$\text{Amount of isomerization (\%)} = \frac{\text{Amount of butene-2}}{\text{Amount of butene-1 plus butene-2}} \times 100$$

(b) Measurement of Polymer Colour

An ethylene concentration of up to 15 wt.% was used in these experiments. The reactor effluent was passed through 4.57 mm ID tubing heated to a temperature of 296°C prior to injection of the first deactivator. The hold-up time in the tubing was about 0.2 min. After injection of the first deactivator, the resultant stream was passed through a further length of 4.57 mm ID tubing, which was heated to 320°C, for a hold-up time of about 2.8 min. A second deactivator was then injected into the stream. The deactivated polymer stream thus obtained was maintained at 320°C for about 1.2 minutes and then flashed into the barrel of a ram extruder heated to about 220°C, the gaseous matter obtained being removed from the extruder. The molten polymer obtained was periodically extruded into a mould having a depth of 1 mm and a diameter of 40 mm and then rapidly cooled to ambient temperature. The plaques thus obtained were then stripped for eight hours with a mixture of saturated steam and air (7:1, by volume) at atmospheric pressure and then dried for 4 hours using air at 100°C. The colour of the plaques was then measured on a Hunter* L,a,b colourimeter the measurement being on four plaques stacked in a holder having a black background.

The present invention is illustrated by the following examples. The solvent used in the examples was cyclohexane.

Example I

The catalyst was prepared by in-line mixing of (i) a solution of titanium tetrachloride (0.5 mmole/litre) and vanadium oxytrichloride (0.5 mmoles/litre) in cyclohexane with (ii) a solution of 1.9 mmoles/litre of diethylaluminum chloride in cyclohexane, the atomic ratio of aluminum to titanium plus vanadium being 1.67:1. After about 20 seconds, a stream of hot cyclohexane was injected into the catalyst mixture, the resultant stream having a temperature of 210°C. The stream was maintained at this temperature for one minute.

The catalyst obtained using the above procedure was fed into the reactor. A co-catalyst of triethyl dimethyl siloxalane was also fed to the reactor. The co-catalyst was used as a 4 mmole/litre solution in cyclohexane and the rate of feed to the reactor was the same as that of the above solution of titanium tetrachloride/vanadium oxytrichloride. The monomeres were ethylene and butene-1. The reactor effluent was treated as described hereinbefore for experiments for measurement of isomerization.

The first deactivators used and the resultant amounts of isomerization are shown in Table I. Run 3 and 5 are of the present invention; the remaining runs are comparative runs. The runs were carried out in sequence and illustrate the improvement obtained according to the teachings of the present invention. The colour of the polymer obtained in Run 4 was significantly inferior to that of Runs 3 and 5.

* denotes trade mark

# EP 0 193 263 B1

TABLE I

| Run No. | First Deactivator | Ratio* | Amount of Isomerization (%) |
|---|---|---|---|
| 1 | water | 0.63 | 15 |
| 2 | water/carbon dioxide | 0.63/1.07 | 12 |
| 3 | carbon dioxide | 1.07 | 6 |
| 4 | none | — | 3 |
| 5 | carbon dioxide | 1.07 | 4 |
| 6 | water/carbon dioxide | 0.63/1.07 | 29 |
| 7 | water | 0.63 | 25 |

* moles of first deactivator:moles of chlorine plus alkyl radicals in catalyst.

Example II

Ethylene was polymerized using the procedure of Example I. The effluent from the reactor was treated as described hereinbefore for experiments for measurement of polymer colour. The second deactivator was a 4.2 mmolar solution of calcium caprylate/caprate in cyclohexane. The molar ratio of this deactivator to chlorine plus alkyl radicals in the catalyst was 0.22.

The first deactivators used and the colour of the resultant polymers are shown in Table II. Runs 9—11 and 14—16 are of the present invention; the remaining runs are comparative runs. The runs were carried out in the sequence shown.

The results in Table II show that the colour of the polymer is the same, within experimental error, in all runs except Run 12 which is a comparative run.

TABLE II

| Run No. | First Deactivator | Ratio* | Colour | |
|---|---|---|---|---|
| | | | L value | b value |
| 8 | water | 0.25 | 75.0 | −1.7 |
| 9 | carbon dioxide | 0.31 | 75.7 | −1.2 |
| 10 | carbon dioxide | 0.62 | 75.2 | −1.2 |
| 11 | carbon dioxide | 1.56 | 75.3 | −1.3 |
| 12 | water/carbon dioxide | 0.49/1.56 | 75.2 | −0.4 |
| 13 | water | 0.49 | 74.7 | −1.4 |
| 14 | carbon dioxide | 1.56 | 75.1 | −1.7 |
| 15 | carbon dioxide | 0.62 | 75.7 | −2.2 |
| 16 | carbon dioxide | 0.31 | 75.5 | −2.0 |
| 17 | water | 0.49 | 73.9 | −2.0 |

* moles of first deactivator:moles of chlorine plus alkyl radicals in catalyst.

Example III

The procedure of Example I was repeated for a series of runs in sequence, except that the amount of second deactivator was about 0.27 moles of calcium for each mole of chlorine plus alkyl radicals in the catalyst.

6

The results obtained are shown in Table III.

TABLE III

| Run No. | First Deactivator | Ratio* | Amount of Isomerization (%) |
|---|---|---|---|
| 18 | none | none | 14 |
| 19 | carbon dioxide | 1.09 | 12 |
| 20 | carbon dioxide | 1.09 | 3 |
| 21 | dimethyl carbonate | 0.35 | 3 |
| 22 | water | 0.44 | 16 |
| 23 | carbon dioxide | 0.91 | 9 |
| 24 | dimethyl carbonate | 0.29 | 5 |
| 25 | water | 0.44 | 24 |
| 26 | dimethyl carbonate | 0.29 | 13 |
| 27 | carbon dioxide | 0.91 | 33 |
| 28 | water | 0.44 | 34 |
| 29 | carbon dioxide | 0.91 | 15 |

It will be noted that there is significant variation between the results of different runs using the same first deactivator. It is believed that the performance of any particular first deactivator is influenced by a number of factors in the polymerization process, including the nature of the previous deactivator; such a phenomenon observed in pilot plant studies would not be observed in a commercial-scale operation using a particular first deactivator.

Example IV

The procedure of Example II was repeated for a series of runs in sequence, except that the mole ratio of second deactivator (calcium caprylate/caprate) to the chlorine plus alkyl radicals in the catalyst was 0.35:1. In addition, the measurement of colour was made on individual plaques, usually eight in number, using a white background.

The results obtained are shown in Table IV.

TABLE IV

| Run No. | First Deactivator | Ratio* | Colour | |
|---|---|---|---|---|
| | | | L value | b value |
| 30 | dimethyl carbonate | 0.35 | 87.0 | 2.40 |
| 31 | carbon dioxide | 1.09 | 87.3 | 2.28 |
| 32 | water | 0.53 | 87.6 | 2.14 |
| 33 | dimethyl carbonate | 0.35 | 87.2 | 2.12 |
| 34 | carbon dioxide | 1.09 | 87.2 | 2.37 |

Example V

The procedure of Example IV was repeated using calcium 2-ethylhexanoate as second deactivator and a molar ratio of second deactivator to chlorine plus alkyl radicals in the catalyst of 0.25:1.

7

The results obtained are shown in Table V.

TABLE V

| Run No. | First Deactivator | Ratio* | Colour | |
|---|---|---|---|---|
| | | | L value | b value |
| 35 | water | 0.53 | 8.65 | 1.97 |
| 36 | dimethyl carbonate | 0.35 | 87.1 | 1.80 |
| 37 | carbon dioxide | 1.09 | 87.0 | 2.00 |

The results of Table IV and V show that the polymer has similar colour in all runs.

**Claims**

1. A solution polymerization process for the preparation of high molecular weight polymers of alpha-olefins selected from the group consisting of homopolymers of ethylene and copolymers of ethylene and $C_4$—$C_{12}$ higher alpha-olefins, said process comprising feeding monomer selected from the group consisting of ethylene and mixtures of ethylene and at least one $C_4$—$C_{12}$ alpha-olefin, a coordination catalyst and inert hydrocarbon solvent to a reactor, said catalyst being a titanium-based and/or vanadium-based coordination catalyst, polymerizing said monomer at a temperature of up to 320°C and a pressure of less than 25 MPa, deactivating the catalyst in the solution so obtained by sequentially admixing therewith a minor amount of a deactivating agent followed by a solution of a salt of an alkaline earth metal or zinc and aliphatic monocarboxylic acid dissolved in hydrocarbon solvent, said deactivating agent being selected from the group consisting of carbon dioxide, carbon monoxide, and dimethyl carbonate, and mixtures thereof, separating the hydrocarbon solvent and other volatile matter from the resultant solution and recovering a composition comprising said high molecular weight polymer, the amount of the deactivating agent being not more than 2.5 moles of the deactivating agent per mole of halogen plus alkyl radicals in the coordination catalyst.

2. The process of Claim 1 in which the deactivating agent is carbon dioxide.

3. The process of Claim 1 in which the deactivating agent is carbon monoxide.

4. The process of Claim 1 in which the deactivating agent is dimethyl carbonate.

5. The process of any one of Claims 1 to 4 in which the polymerization temperature is in the range 105—310°C.

6. The process of any one of Claims 1 to 5 in which the coordination catalyst is based on titanium and vanadium.

7. The process of any one of Claims 1 to 6 in which the said aliphatic monocarboxylic acid has 6 to 20 carbon atoms.

8. The process of any one of Claims 1 to 6 in which the said aliphatic monocarboxylic acid has 8 to 12 carbon atoms.

9. The process of any one of Claims 1 to 8 in which the said salt of an aliphatic carboxylic acid is a calcium salt.

10. The process of any one of Claims 1 to 9 in which the hydrocarbon solvent of the solution of the said alkaline earth metal or zinc salt is the same as that fed to the reactor.

**Patantansprüche**

1. Lösungspolymerisationsverfahren zur Herstellung von Polymeren von Alpha-Olefinen mit hohem Molekulargewicht, die aus der Gruppe gewählt sind, die aus Homopolymeren von Äthylen und Copolymeren von Äthylen und $C_4$—$C_{12}$-höheren Alpha-Olefinen besteht, das genannte Verfahren das Einbringen eines Monomers, das aus der Gruppe gewählt ist, die aus Äthylen und Mischungen von Äthylen und wenigstens einem $C_4$—$C_{12}$ höheren Alpha-Olefin besteht, eines Koordinationskatalysators und eines inerten Kohlenwasserstofflösungsmittels in ein Reaktionsgefäß, wobei der genannte Katalysator ein Koordinationskatalysator auf Titan- und/oder Vanadiumbasis ist, Polymerisieren des genannten Monomers bei einer Temperatur von bis zu 320°C und einem Druck von weniger als 25 MPa, Desaktivieren des Katalysators in der so erhaltenen Lösung durch aufeinanderfolgendes Mischen derselben mit einer kleinen Menge eines Desaktivierungsmittels gefolgt von einer Lösung eines Salzes eines Erdalkalimetalls oder Zink und einer aliphatischen Monocarbonsäure, gelöst in einem Kohlenwasserstofflösungsmittel, wobei das genannte Deskativierungsmittel aus der Gruppe gewählt ist, die aus Kohlendioxid, Kohlenmonoxid, Dimethylcarbonat und Mischungen derselben besteht, Trennen des Kohlenwasserstofflösungsmittels und anderer flüchtiger Materialien von der entstandenen Lösung und Gewinnen einer Zusammensetzung, die das genannte Polymer mit hohem Molekulargewicht enthält, wobei die Menge am genannten Deskativierungsmittel nicht mehr als 2,5 Mol Deskativierungsmittel pro Mol Halogen plus Alkylreste im Koordinationskatalysator beträgt.

2. Verfahren nach Anspruch 1, in dem das Desaktivierungsmittel Kohlendioxid ist.

3. Verfahren nach Anspruch 1, in dem das Desaktivierungsmittel Kohlenmonoxid ist.

4. Verfahren nach Anspruch 1, in dem das Desaktivierungsmittel Dimethylcarbonat ist.

5. Verfahren nach einem der Ansprüche 1 bis 4, in dem die Polymerisationstemperatur innerhalb eines Bereiches von 105—310°C liegt.

6. Verfahren nach einem der Ansprüche 1 bis 5, in dem der Koordinationskatalysator ein solcher auf Titan- und Vanadiumbasis ist.

7. Verfahren nach einem der Ansprüche 1 bis 6, in dem die genannte aliphatische Monocarbonsäure 6 bis 20 C-Atome aufweist.

8. Verfahren nach einem der Ansprüche 1 bis 6, in dem die genannte aliphatische Monocarbonsäure 8 bis 12 C-Atome besitzt.

9. Verfahren nach einem der Ansprüche 1 bis 8, in dem das genannte Salz einer aliphatischen Carbonsäure ein Calciumsalz ist.

10. Verfahren nach einem der Ansprüche 1 bis 9, in dem das Kohlenwasserstofflösungsmittel der Lösung des genannten Salzes eines Erdalkalimetalls oder Zink das gleiche ist, das dem Reaktionsgefäß zugeführt wird.

## Revendications

1. Procédé de polymérisation en solution pour la préparation de polymère d'alpha-oléfines de poids moléculaire élevé, choisis dans le groupe constitué d'homopolymères d'éthylène et de copolymères d'éthylène et d'alpha-oléfines supérieures en $C_4$—$C_{12}$, ledit procédé comprenant les étapes consistant à amener un monomère choisi dans le groupe constitué de l'éthylène et de mélanges d'éthylène et d'au moins une alpha-oléfine en $C_4$—$C_{12}$, un catalyseur de coordination et un solvant hydrocarboné inerte dans un réacteur, ledit catalyseur étant un catalyseur de coordination à base de titane et/ou à base de vanadium, à polymériser ledit monomère à une température jusqu'à 320°C et une pression inférieure à 25 MPa, à désactiver le catalyseur dans la solution ainsi obtenue en mélangeant, de façon séquentielle, à celle-ci une petite quantité d'un agent désactivant, suivi par une solution d'un sel d'un métal alcalino-terreux ou de zinc et d'un acide monocarboxylique aliphatique dissous dans un solvant hydrocarboné, ledit agent désactivant étant choisi dans le groupe constitué du dioxyde de carbone, du monoxyde de carbone et du diméthylcarbonate et leurs mélanges, à séparer le solvant hydrocarboné et d'autres matières volatiles de la solution résultante, et à récupérer une composition comprenant ledit polymère de poids moléculaire élevé, la quantité dudit agent désactivant n'étant pas supérieure à 2,5 moles de l'agent désactivant par mole d'halogène plus les radicaux alkylés dans le catalyseur de coordination.

2. Procédé de la revendication 1, dans lequel l'agent désactivant est du dioxyde de carbone.

3. Procédé de la revendication 1, dans lequel l'agent désactivant est du monoxyde de carbone.

4. Procédé de la revendication 1, dans lequel l'agent désactivant est du diméthylcarbonate.

5. Procédé selon l'une quelconque des revendications 1 à 4, dans lequel la température de polymérisation est dans la plage de 105—310°C.

6. Procédé selon l'une quelconque des revendications 1 à 5, dans lequel le catalyseur de coordination est à base de titane et de vanadium.

7. Procédé selon l'une quelconque des revendications 1 à 6, dans lequel ledit acide monocarboxylique aliphatique présente de 6 à 20 atomes de carbone.

8. Procédé selon l'une quelconque des revendications 1 à 6, dans lequel ledit acide monocarboxylique aliphatique présente de 8 à 12 atomes de carbone.

9. Procédé selon l'une quelconque des revendications 1 à 8, dans lequel ledit sel d'un acide carboxylique aliphatique est un sel de calcium.

10. Procédé selon l'une quelconque des revendications 1 à 9, dans lequel le solvant hydrocarboné de la solution du sel de métal alcalino-terreux ou de zinc est le même que celui fourni au réacteur.